# EUROPÄISCHE PATENTSCHRIFT

(11) **EP 0 655 197 B1**
(45) Veröffentlichungstag und Bekanntmachung des Hinweises auf die Patenterteilung: **01.07.1998**
(21) Anmeldenummer: 94117333.8
(22) Anmeldetag: 03.11.1994
(51) Int. Cl.: A01N 43/653, A01N 55/00, A01N 25/02

(54) **Verwendung von Phosphorsäureestern als Kristallisationsinhibitoren**
Use of phosphoric acid esters as crystallisation inhibitors
Utilisation d'esters d'acidephosphorique comme inhibiteurs de cristallisation

(30) Priorität: 16.11.1993 DE 4339119; 08.07.1994 DE 4424065
(43) Veröffentlichungstag der Anmeldung: 31.05.1995
(73) Patentinhaber: BAYER AG, 51368 Leverkusen (DE)
(72) Erfinder: Reizlein, Karl, Dr., D-51061 Köln (DE); Wangermann, Klaus, Dr., D-47800 Krefeld (DE); Wirth, Wolfgang, Dr., D-51429 Bergisch Gladbach (DE)

(56) Entgegenhaltungen:
- EP-A- 0 085 922
- EP-A- 0 328 217
- EP-A- 0 391 171
- EP-A- 0 453 899
- EP-A- 0 453 915
- EP-A- 0 453 922
- US-A- 2 926 096

## Beschreibung

Die vorliegende Erfindung betrifft die neue Verwendung von bestimmten Phosphorsäureestern zur Verhinderung der Kristallisation beim Ausbringen von wäßrigen Spritzflüssigkeiten auf Basis bestimmter fungizider Wirkstoffe.

In Spritzgeräten, die üblicherweise zur Ausbringung wäßriger Formulierungen von Pflanzenbehandlungsmitteln verwendet werden, sind mehrere Filter sowie Düsen vorhanden. So befinden sich zum Beispiel Saugfilter zwischen dem Tank und der Tankpumpe und ferner Druckfilter, welche nach der Pumpe im Druckbereich angeordnet sind. Außerdem können auch Düsenfilter enthalten sein, die sich direkt vor den Spritzdüsen befinden. Alle diese Filter sowie auch die Düsen können bei der Ausbringung von wäßrigen Spritzflüssigkeiten auf Basis fester Wirkstoffe mehr oder weniger leicht durch auskristallisierenden Wirkstoff verstopfen.

Es ist bereits bekannt, daß die nachstehend genannten Azol-Derivate fungizid wirksam sind und in Form von wäßrigen Spritzbrühen auf Pflanzen und/oder deren Lebensraum appliziert werden können:
1-(4-Chlorphenyl)-4,4-dimethyl-3-(1,2,4-triazol-1-yl-methyl)-pentan-3-ol,
1-(4-Chlorphenoxy)-3,3-dimethyl-1-(1,2,4-triazol-1-yl)-butan-2-on,
1-(4-Chlorphenoxy)-3,3-dimethyl-1-(1,2,4-triazol-1-yl)-butan-2-ol,
1-(4-Phenyl-phenoxy)-3,3-dimethyl-1-(1,2,4-triazol-1-yl)-butan-2-ol,
1-(4-Fluorphenyl)-1-(2-fluorphenyl)-2-(1,2,4-triazol-1-yl)-ethan-1-ol,
1-(1,2,4-Triazol-1-yl)-2-(2,4-dichorphenyl)-hexan-2-ol,
1-([Bis-(4-fluorphenyl)-methyl-silyl]-methyl)-1H-(1,2,4-triazol),
1-(4-Chlorphenyl)-2-(1,2,4-triazol-1-yl)-4,4-dimethyl-pent-1-en-3-ol,
1-(2,4-Dichlorphenyl)-2-(1,2,4-triazol-1-yl)-4,4-dimethyl-pent-1-en-3-ol,
1-(4-Chlorphenyl)-1-(1-cyclopropyl-ethyl)-2-(1,2,4-triazol-1-yl)-ethan-1-ol,
1-(4-Chlorphenyl)-3-phenyl-3-cyano-4-(1,2,4-thazol-1-yl)-butan und
1-[3-(2-Chlorphenyl)-2-(4-fluorphenyl)-oxiran-2-yl-methyl]-1H-(1,2,4-triazol)
(vgl. EP-OS 0 040 345, DE-PS 2 201 063, DE-PS 2 324 010, EP-OS 0 015 756, US-PS 4 551 469, EP-OS 0 068 813, DE-OS 2 838 847, DE-OS 3 010 560, DE-OS 3 406 993, DE-OS 2 821 971 und EP-OS 0 196 038).

Weiterhin ist bekannt, daß bei der Herstellung und beim Ausbringen von Spritzflüssigkeiten der genannten Wirkstoffe N-Alkyllactame und Alkylcarbonsäuredimethylamide als Kristallisationsinhibitoren eingesetzt werden können (vgl. EP-OS 0 391 168 und EP-OS 0 453 899). So lassen sich N-Octyl-pyrrolidon und/oder ein Gemisch, das durchschnittlich zu 5 % aus Hexansäure-dimethylamid, 50 % Octansäure-dimethylamid, 40 % Decansäure-dimethylamid und zu 5 % aus Dodecansäure-dimethylamid besteht, verwenden, um beim Ausbringen von wäßrigen Spritzbrühen, die 1-(4-Chlorphenyl)-4,4-dimethyl-3-(1,2,4-triazol-1-yl-methyl)-pentan-3-ol als Wirkstoff enthalten, ein Auskristallisieren dieses Wirkstoffes in den Spritzgeräten zu verhindern. Bei längerem Ausbringen solcher Spritzflüssigkeiten ist die Wirksamkeit der genannten Kristallisationsinhibitoren aber nicht immer befriedigend.

Schließlich ist auch bekannt, daß sich Phosphorsäure-tributylester verwenden läßt, um die Kristallisation von (±)-2-Ethoxy-2,3-dihydro-3,3-dimethylbenzofuran-5-yl-methylsulfonate (= Ethofumesate) in Formulierungen dieses herbiziden Wirkstoffes zu verhindern (vgl. EP-OS 0 328 217). Ein entsprechender Einsatz in Zubereitungen anderer agrochemischer Wirkstoffe ist aber bisher noch nicht beschrieben worden.

Es wurde nun gefunden, daß sich Phosphorsäureester der Formel 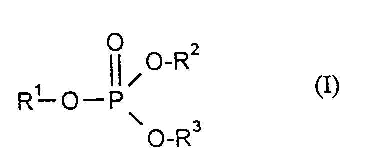 in welcher
- R¹: für Alkyl mit 2 bis 18 Kohlenstoffatomen steht und
- R² und R³: unabhängig voneinander für Alkyl mit 2 bis 12 Kohlenstoffatomen stehen,
verwenden lassen, um beim Ausbringen von wäßrigen Spritzflüssigkeiten, die
A) mindestens ein Azol-Derivat der Formel 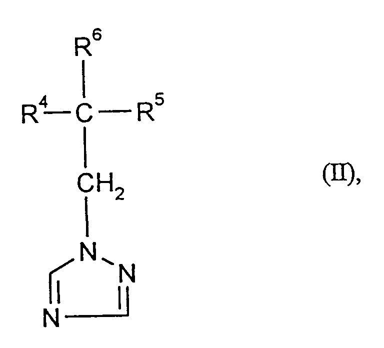 in welcher
   a)
      - R⁴: für 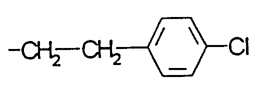 steht,
      - R⁵: für tert.-Butyl steht und
      - R⁶: für Hydroxy steht,
      oder
   b)
      - R⁴: für 4-Fluorphenyl steht,
      - R⁵: für 2-Fluorphenyl steht und
      - R⁶: für Hydroxy steht,
      oder
   c)
      - R⁴: für 2,4-Dichlorphenyl steht,
      - R⁵: für n-Butyl steht und
      - R⁶: für Hydroxy steht,
      oder
   d)
      - R⁴: für 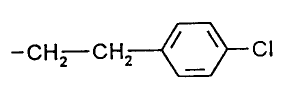 steht,
      - R⁵: für Phenyl steht und
      - R⁶: für Cyano steht,
      oder
   e)
      - R⁴: für 4-Chlorphenyl steht,
      - R⁵: für 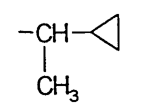 steht und
      - R⁶: für Hydroxy steht,
      und/oder
      mindestens ein Azol-Derivat der Formel 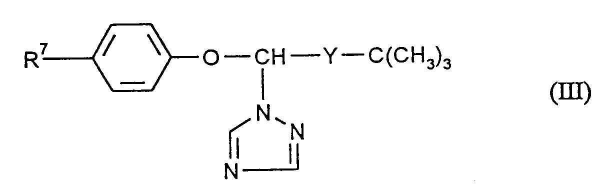 in welcher
      a)
         - Y: für -CH(OH) steht und
         - R⁷: für Chlor oder Phenyl steht,
         oder
      b)
         - Y: für CO steht und
         - R⁷: für Chlor steht,
         und/oder
         mindestens ein Azol-Derivat der Formel 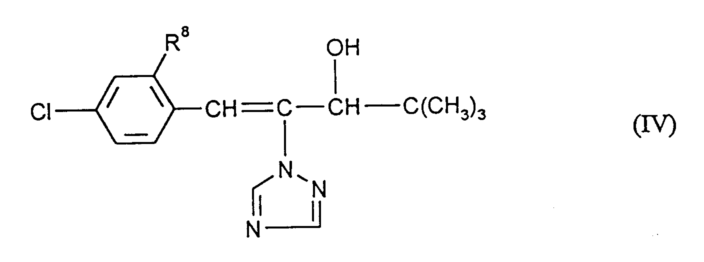 in welcher
         - R⁸: für Wasserstoff oder Chlor steht,
      und/oder
      1-([Bis-(4-fluorphenyl)-methyl-silyl]-methyl)-1H-(1,2,4-triazol) der Formel 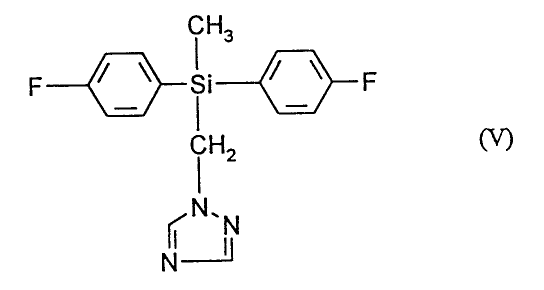 und/oder
      1-[3-(2-Chlorphenyl)-2-(4-fluorphenyl)-oxiran-2-yl-methyl]-1H-(1,2,4-triazol) der Formel 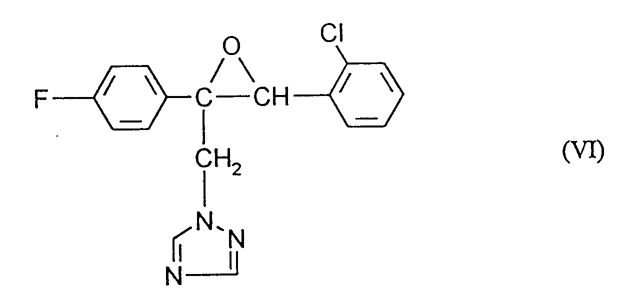 und
B) gegebenenfalls einen oder mehrere weitere Wirkstoffe sowie Zusatzstoffe enthalten, ein Auskristallisieren der Wirkstoffe der Formeln (II) bis (VI) in den Spritzgeräten zu verhindern.

Es ist als äußerst überraschend zu bezeichnen, daß die Kristallisationsneigung von Azol-Derivaten der Formeln (II) bis (VI) durch die erfindungsgemäße Verwendung von Phosphorsäureestern der Formel (I) stark herabgesetzt wird. Vor allem war nicht zu erwarten, daß Phosphorsäureester der Formel (I) wesentlich besser als N-Alkyllactame und Alkylcarbonsäure-dimethylamide für den angegebenen Zweck geeignet sind.

Die Verwendung von Phosphorsäureestern der Formel (I) in wäßrigen Formulierungen auf Basis von fungizid wirksamen Azol-Derivaten der Formeln (II) bis (VI) weist eine Reihe von Vorteilen auf. So handelt es sich bei den Phosphorsäureestern der Formel (I) um Stoffe, die problemlos zu handhaben und auch in größeren Mengen verfügbar sind. Ferner wird durch den Einsatz der Stoffe der Formel (I) verhindert, daß beim Versprühen von wäßrigen Formulierungen, die Wirkstoffe der Formeln (II) bis (VI) enthalten, sowohl die Filter als auch die Düsen der Spritzgeräte verstopfen. Vorteilhaft ist auch, daß Phosphorsäureester der Formel (I) im Pflanzenschutz keinerlei unerwünschte Nebenwirkungen ausüben.

Die erfindungsgemäß verwendbaren Phosphorsäureester sind durch die Formel (I) allgemein definiert.
- R¹: steht vorzugsweise für geradkettiges oder verzweigtes Alkyl mit 4 bis 12 Kohlenstoffatomen.
- R²: steht vorzugsweise für geradkettiges oder verzweigtes Alkyl mit 2 bis 8 Kohlenstoffatomen.
- R³: steht vorzugsweise für geradkettiges oder verzweigtes Alkyl mit 2 bis 8 Kohlenstoffatomen.
- R¹: steht besonders bevorzugt für n-Butyl, iso-Butyl, sek.-Butyl, tert.-Butyl, n-Pentyl, n-Hexyl, 2-Ethyl-hexyl, n-Heptyl, n-Octyl, iso-Octyl, n-Nonyl, iso-Nonyl, n-Decyl, n-Dodecyl oder iso-Dodecyl.
- R²: steht besonders bevorzugt für n-Butyl, iso-Butyl, sek.-Butyl, tert.-Butyl, n-Pentyl, n-Hexyl, 2-Ethyl-hexyl, n-Heptyl, n-Octyl oder iso-Octyl.
- R³: steht besonders bevorzugt für n-Butyl, iso-Butyl, sek.-Butyl, tert.-Butyl, n-Pentyl, n-Hexyl, 2-Ethyl-hexyl, n-Heptyl, n-Octyl oder iso-Octyl.

Als Beispiele für erfindungsgemäß verwendbare Phosphorsäureester seien genannt:
Phosphorsäure-tri-n-butylester,
Phosphorsäure-tri-n-pentylester,
Phosphorsäure-tri-n-hexylester,
Phosphorsäure-tri-n-heptylester,
Phosphorsäure-tri-n-octylester,
Phosphorsäure-tri-(2-ethyl-hexyl)-ester.

Die Phosphorsäureester der Formel (I) sind bereits bekannt (vgl. Lehrbücher der Organischen Chemie).

Die in den erfindungsgemäß verwendbaren wäßrigen Spritzflüssigkeiten enthaltenen Azolderivate sind durch die Formeln (II) bis (VI) definiert. Es können einzelne oder auch mehrere der folgenden Azol-Derivate enthalten sein.
1-(4-Chlorphenyl)-4,4-dimethyl-3-(1,2,4-triazol-1-yl-methyl)-pentan-3-ol der Formel 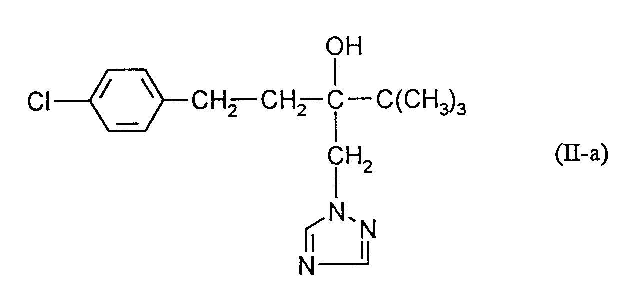 1-(4-Fluorphenyl)-1-(2-fluorphenyl)-2-(1,2,4-triazol-1-yl)-ethan-1-ol der Formel 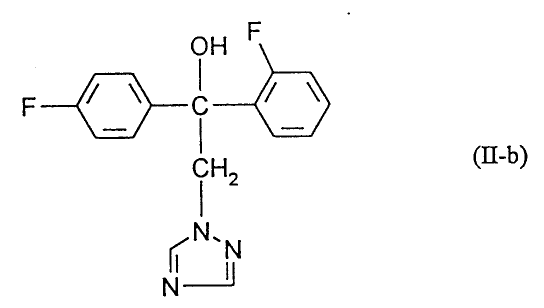 1-(1,2,4-Triazol-1-yl)-2-(2,4-dichlorphenyl)-hexan-2-ol der Formel 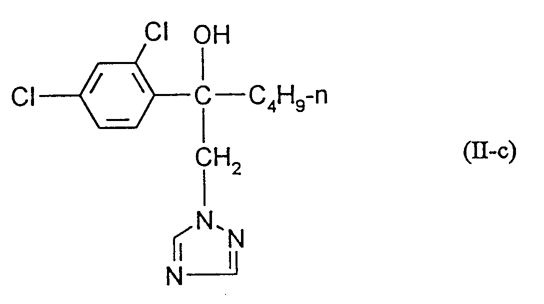 1-(4-Chlorphenyl)-3-phenyl-3-cyano-4-(1,2,4-triazol-1-yl)-butan der Formel 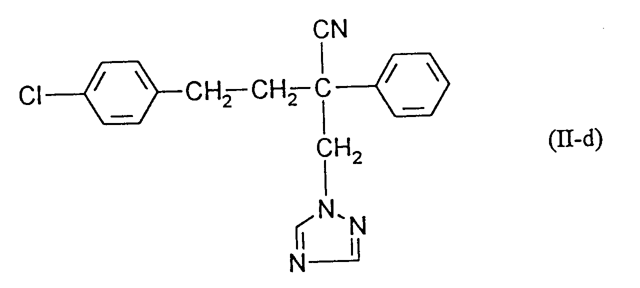 1-(4-Chlorphenyl)-1-(1-cyclopropyl-ethyl)-2-(1,2,4-triazol-1-yl)-ethan-1-ol der Formel 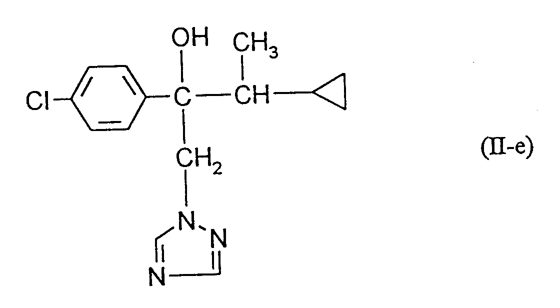 1-(4-Chlorphenoxy)-3,3-dimethyl-1-(1,2,4-triazol-1-yl)-butan-2-ol der Formel 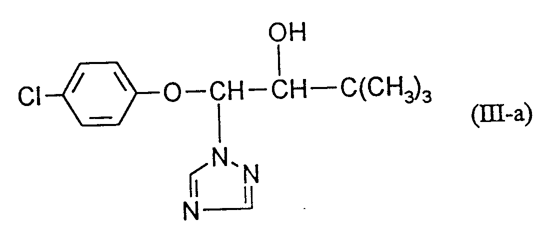 1-(4-Phenyl-phenoxy)-3,3-dimethyl-1-(1,2,4-triazol-1-yl)-butan-2-ol der Formel 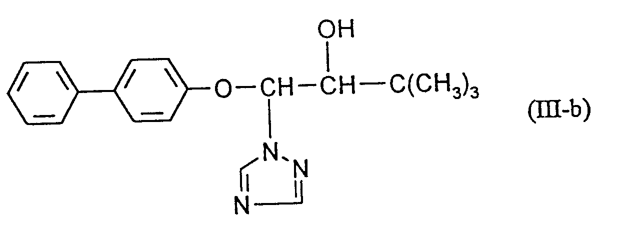 1-(4-Chlorphenoxy)-3,3-dimethyl-1-(1,2,4-thazol-1-yl)-butan-2-on der Formel 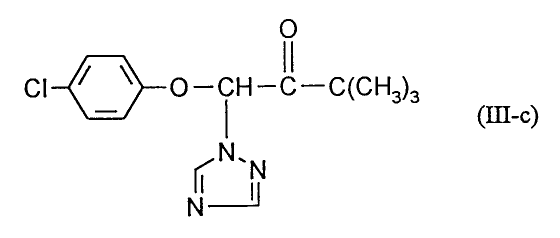 1-(4-Chlorphenyl)-2-(1,2,4-triazol-1-yl)-4,4-dimethyl-pent-1-en-3-ol der Formel 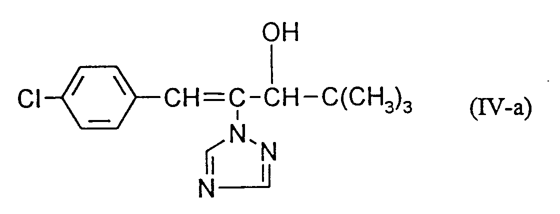 1-(2,4-Dichlorphenyl)-2-(1,2,4-triazol-1-yl)-4,4-dimethyl-pent-1-en-3-ol der Formel 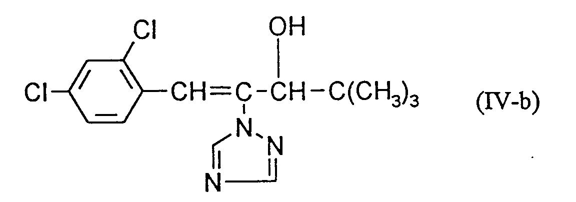 1-([Bis-(4-fluorphenyl)-methyl-silyl]-methyl)-1H-(1,2,4-triazol) der Formel 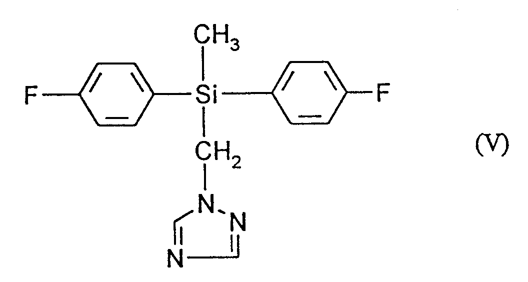 1-[3-(2-Chlorphenyl)-2-(4-fluorphenyl)-oxiran-2-yl-methyl]-1H-(1,2,4-triazol) der Formel

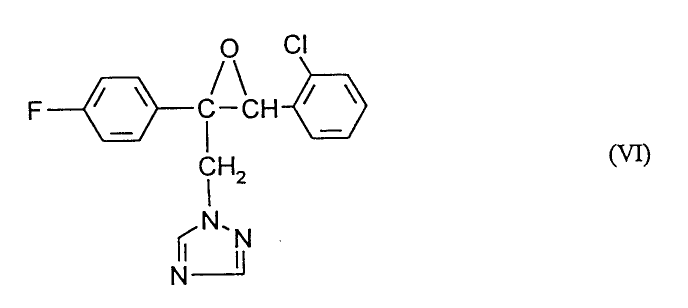

Die Wirkstoffe der Formeln (II) bis (VI) sowie deren Verwendung zur Bekämpfung phytopathogener Pilze sind bekannt (vgl. EP-OS 0 040 345, US-PS 4 551 469, EP-PS 0 015 756, EP-OS 0 068 813, DE-OS 3 406 993, DE-PS 2 324 010, DE-PS 2 201 063, DE-OS 2 838 847, DE-OS 3 010 560, DE-OS 2 821 971 und EP-OS 0 196 038).

Die Wirkstoffe der Formeln (II) bis (VI) lassen sich in üblichen Formulierungen einsetzen. Vorzugsweise erfolgt die Ausbringung in Form von wäßrigen Spritzbrühen.

In den erfindungsgemäß verwendbaren Spritzflüssigkeiten können neben den Wirkstoffen der Formeln (II) bis (VI) auch einer oder mehrere weitere Wirkstoffe enthalten sein. Vorzugsweise in Frage kommen dabei Verbindungen mit fungiziden Eigenschaften. Als Beispiele für derartige zusätzlich verwendbare Wirkstoffe seien genannt:
N,N-Dimethyl-N'-phenyl-(N'-fluordichlormethylthio)-sulfamid (Dichlofluanid),
N,N-Dimethyl-(N'-fluordichlormethylthio)-N'-(4-methyl-phenyl)-sulfamid (Tolylfluanid),
N-Trichlormethylmercapto-4-cyclohexen-1,2-dicarboxamid (Captan),
N-(1,1,2,2-Tetrachlorethyl-sulfenyl)-cis-4-cyclohexen-1,2-dicarboxamid (Captafol),
N-Trichlormethylthio-phthalimid (Folpet),
N-Dodecyl-guanidin-acetat (Dodine),
Tetrachlor-isophthalo-dinitril (Chlorothalonil),
4,5,6,7-Tetrachlorphthalid,
Zink-ethylen-bis-dithiocarbamat (Zineb),
Mangan-ethylen-bis-dithiocarbamat (Maneb),
Zink-ethylen-bis-dithiocarbamat/Mangan-ethylen-bis-dithiocarbamat (Mancozeb),
Zink-propylen-1,2-bis-dithiocarbamat (Propineb),
1-[3-(4-(1,1-Dimethylethyl)-phenyl)-2-methylpropyl]-piperidin (Fenpropidin),
N-Tridecyl-2,6-dimethyl-morpholin (Tridemorph),
N-Dodecyl-2,6-dimethyl-morpholin (Aldimorph)
cis-4-[3-(4-tert.-Butylphenyl)-2-methyl-propyl]-2,6-dimethylmorpholin (Fenpropimorph)
2-[2-(2,4-Dichlorphenyl)-2-(2-propenyloxy)-ethyl]-imidazol (Imazalil),
N-[2-(2,4,6-Trichlorphenoxy)-ethyl]-N-propyl-1H-imidazol (Prochloraz),
1-[2-(2,4-Dichlorphenyl)-4-propyl-(1,3-dioxolan-2-yl)-methyl]-1H-(1,2,4-triazol) (Propiconazole)
1,2-Dimethyl-cyclopropan-1,2-dicarbonsäure-3,5-dichlor-phenylimid (Procymidone),
2-Methoxycarbamoyl-benzimidazol (Carbendazim),
1-(Butylcarbamoyl)-2-benzimidazol-methylcarbamat (Benomyl),
2,4-Dichlor-6-(2'-chlorphenyl-amino)-1,3,4-triazin (Anilazine),
Bis-(8-Guanidin-O-octyl)-amin-triacetat (Guazatine),
1-(4-Chlorbenzyl)-1-cyclopentyl-3-phenyl-harnstoff (Pencycuron).

Als Zusatzstoffe, die in den erfindungsgemäß verwendbaren Spritzflüssigkeiten vorhanden sein können, kommen oberflächenaktive Stoffe, organische Verdünnungsmittel, Säuren, Kältestabilisatoren und Haftmittel sowie auch weitere Kristallisationsinhibitoren in Frage.

Dabei kommen als oberflächenaktive Stoffe nichtionogene, anionische, kationische und zwitterionische Emulgatoren in Betracht. Zu diesen Stoffen gehören Umsetzungsprodukte von Fettsäuren, Fettsäureestern, Fettalkoholen, Fettaminen, Alkylphenolen oder Alkylarylphenolen mit Ethylenoxid und/oder Propylenoxid, sowie deren Schwefelsäureester, Phosphorsäure-mono-ester und Phosphorsäure-diester, ferner Umsetzungsprodukte von Ethylenoxid mit Propylenoxid, weiterhin Alkylsulfonate, Alkylsulfate, Arylsulfate, Tetra-alkyl-ammoniumhalogenide, Trialkyl-aryl-ammoniumhalogenide und Alkylamin-sulfonate. Die Emulgatoren können einzeln oder auch in Mischung eingesetzt werden. Vorzugsweise genannt seien Umsetzungsprodukte von Rizinusöl mit Ethylenoxid im Molverhältnis 1:20 bis 1:60, Umsetzungsprodukte von C₆-C₂₀-Fettalkoholen mit Ethylenoxid im Molverhältnis 1:5 bis 1:50, Umsetzungsprodukte von Fettaminen mit Ethylenoxid im Molverhältnis 1:2 bis 1:20, Umsetzungsprodukte von 1 Mol Phenol mit 2 bis 3 Mol Styrol und 10 bis 50 Mol Ethylenoxid, Umsetzungsprodukte von 1 Mol Phenol mit 2 bis 3 Mol Vinyltoluol und 10 bis 50 Mol Ethylenoxid, Umsetzungsprodukte von C₈-C₁₂-Alkylphenolen mit Ethylenoxid im Molverhältnis 1:5 bis 1:30, Alkylglykoside, C₈-C₁₆- Alkylbenzol-sulfonsäuresalze, wie z.B. Calcium-, Monoethanolammonium-, Di-ethanolammonium- und Tri-ethanolammonium-salze.

Die in der Praxis verwendeten Emulgatoren aus der Gruppe der Alkylarylpolyglykol-Ether sind häufig Gemische aus mehreren Verbindungen. Insbesondere handelt es sich hierbei um Gemische aus Stoffen, die sich durch den Substitutionsgrad an dem mit der Oxyethylen-Einheit verbundenen Phenylring und die Zahl der Oxyethylen-Einheiten unterscheiden. Dadurch errechnen sich für die Zahl der Substituenten am Phenylring auch gebrochene Zahlen als Mittelwerte. Beispielsweise erwähnt seien Substanzen, für die sich folgende durchschnittliche Zusammensetzungen ergeben:

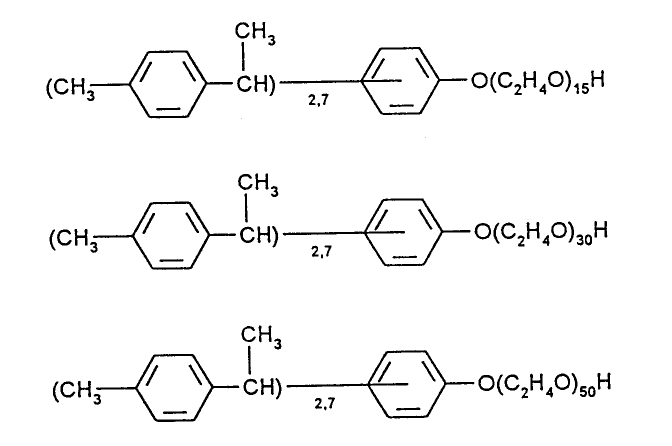

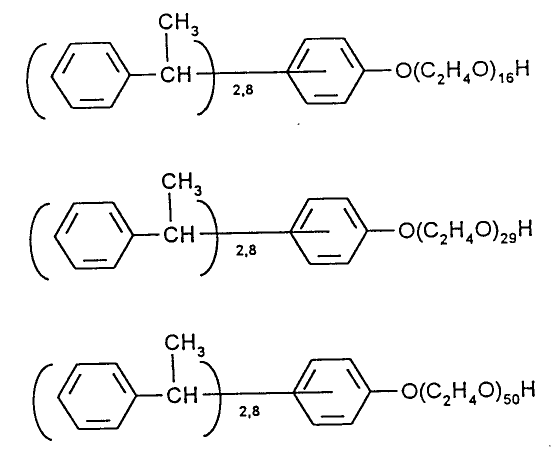

Als organische Verdünnungsmittel können in den erfindungsgemäß verwendbaren Spritzflüssigkeiten alle üblicherweise für derartige Zwecke einsetzbaren polaren und unpolaren organischen Solventien vorhanden sein. Vorzugsweise in Betracht kommen Ketone, wie Methyl-isobutyl-keton und Cyclohexanon, ferner Amide, wie Dimethylformamid weiterhin cyclische Verbindungen, wie N-Methyl-pyrrolidon, N-Octyl-pyrrolidon, N-Dodecyl-pyrrolidon, N-Octyl-caprolactam, N-Dodecyl-caprolactam und γ-Butyrolacton, darüberhinaus stark polare Solventien, wie Dimethylsulfoxid, ferner aromatische Kohlenwasserstoffe, wie Xylol, außerdem Ester, wie Propylenglykol-monomethylether-acetat, Adipinsäure-dibutylester, Essigsäurehexylester, Essigsäure-heptylester, Zitronensäure-tri-n-butylester und Phthalsäure-di-n-butylester, und weiterhin Alkohole, wie Ethanol, n- und i-Propanol, n-und i-Butanol, n- und i-Amylalkohol, Benzylalkohol und 1-Methoxy-2-propanol.

Als Säuren können in den erfindungsgemäß verwendbaren Spritzflüssigkeiten alle üblicherweise für derartige Zwecke einsetzbaren anorganischen und organischen Säuren vorhanden sein. Vorzugsweise in Frage kommen aliphatische und aromatische Hydroxycarbonsäuren, wie Citronensäure, Salicylsäure, Weinsäure und Ascorbinsäure.

Als Kältestabilisatoren können in den erfindungsgemäß verwendbaren Spritzflüssigkeiten alle üblicherweise für diesen Zweck geeigneten Stoffe enthalten sein. Vorzugsweise in Frage kommen Harnstoff, Glycerin und Propylenglykol.

Als Haftmittel können in den erfindungsgemäß verwendbaren Spritzflüssigkeiten alle üblicherweise für diesen Zweck geeigneten Stoffe eingesetzt werden. Vorzugsweise in Betracht kommen Haftmittel wie Carboxymethylcellulose, natürliche und synthetische pulverige, körnige oder latexförmige Polymere, wie Gummi arabicum, Polyvinylalkohol, Polyvinylacetat, sowie natürliche Phospholipide, wie Kephaline und Lecithine, und auch synthetische Phospholipide. Weitere Additive können mineralische und vegetabile Öle sein.

Zusätzlich zu den Phosphorsäureestern der Formel (I) können in den erfindungsgemäß verwendbaren Spritzbrühen noch weitere Kristallisationsinhibitoren enthalten sein. Vorzugsweise in Frage kommt hierbei ein Gemisch, das durchschnittlich zu 5 % aus Hexansäuredimethylamid, 50 % Octansäuredimethylamid, 40 % Decansäuredimethylamid und zu 5 % aus Dodecansäuredimethylamid besteht.

Im übrigen ist in den erfindungsgemäß verwendbaren Spritzflüssigkeiten jeweils Wasser enthalten.

Die Wirkstoffkonzentrationen können in den erfindungsgemäß verwendbaren Spritzflüssigkeiten innerhalb eines bestimmten Bereiches variiert werden. Im allgemeinen liegen die Wirkstoffkonzentrationen zwischen 0,0003 und 5 Gewichtsprozent, vorzugsweise zwischen 0,003 und 3 Gewichtsprozent.

Auch das Verhältnis von Wirkstoff der Formeln (II) bis (VI) zu Phosphorsäureester der Formel (I) kann innerhalb eines bestimmten Bereiches variiert werden. Im allgemeinen liegt das Gewichtsverhältnis von Wirkstoff aus der Gruppe (A) zu Phosphorsäureester der Formel (I) zwischen 1:0,2 und 1:5, vorzugsweise zwischen 1:0,6 und 1:2.

Die Mengen an weiteren Wirkstoffen bzw. Zusatzstoffen können in den erfindungsgemäß verwendbaren Spritzflüssigkeiten innerhalb eines größeren Bereiches variiert werden. Sie liegen in der Größenordnung wie es üblicherweise in derartigen wäßrigen Spritzflüssigkeiten der Fall ist.

Die Herstellung der erfindungsgemäß verwendbaren Spritzflüssigkeiten erfolgt nach üblichen Methoden. Im allgemeinen geht man so vor, daß man zunächst ein Konzentrat herstellt, indem man bei Temperaturen zwischen 10°C und 30°C die benötigten Komponenten in beliebiger Reihenfolge zusammengibt und homogen vermischt und das entstehende Gemisch gegebenenfalls filtriert. Zur Herstellung der anwendungsfertigen Spritzflüssigkeiten wird die konzentrierte Formulierung gegebenenfalls unter Rühren und/oder Pumpen mit der jeweils gewünschten Menge an Wasser so vermischt, daß die Formulierung in Wasser gleichmäßig und feindispers verteilt wird.

Sowohl zur Zubereitung der konzentrierten Formulierungen als auch zur Herstellung und Ausbringung der erfindungsgemäß verwendbaren Spritzflüssigkeiten lassen sich alle üblicherweise für diese Zwecke geeigneten Mischapparate und Spritzgeräte einsetzen.

Durch die Verwendung von Phosphorsäureestern der Formel (I) in wäßrigen Spritzflüssigkeiten auf Basis von Wirkstoffen der Formeln (II) bis (VI) wird die Auskristallisation von Wirkstoff sowohl in der konzentrierten, handelsüblichen Formulierung als auch beim Ausbringen der daraus hergestellten wäßrigen Spritzflüssigkeiten in den Filtern und Austrittsöffnungen der Spritzgeräte entweder ganz unterbunden oder soweit verhindert, daß die Ausbringung der Spritzbrühen nicht beeinträchtigt ist.

Die Herstellung und das Kristallisationsverhalten der erfindungsgemäß verwendbaren Spritzflüssigkeiten werden durch die folgenden Beispiele veranschaulicht.

### Herstellungsbeispiele

### Beispiel 1

Zur Herstellung einer Formulierung werden
- 25,0 Gew.-Teile: 1-(4-Chlorphenyl)-4,4-dimethyl-3-(1,2,4-triazol-1-yl-methyl)-pentan-3-ol der Formel 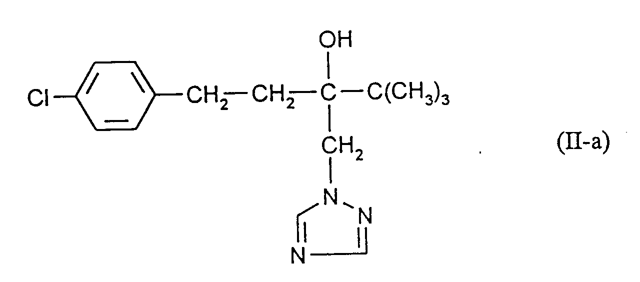
- 40,0 Gew.-Teile: Phosphorsäure-tri-n-butylester,
- 6,5 Gew.-Teile: 4-(n-Dodecyl)-benzol-sulfonsäure-(2-hydroxyethyl)-ammoniumsalz,
- 6,5 Gew.-Teile: des Emulgators der durchschnittlichen Zusammensetzung der Formel 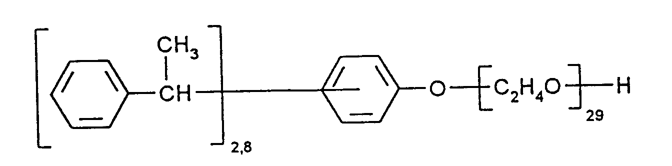
- 20,0 Gew.-Teile: N-Methyl-pyrrolidon und
- 2,0 Gew.-Teile: Wasser
bei Raumtemperatur vermischt und zu einer homogenen Flüssigkeit verrührt. Aus dem so erhaltenen Konzentrat wird durch Vermischen mit Wasser definierter Härte (CIPAC-C Wasser) eine Spritzflüssigkeit hergestellt, in welcher das Konzentrat in einer Konzentration von 0,5 Gew.-% enthalten ist.
- CIPAC-C Wasser =: Wasser, das pro Liter 4 mMol Calciumchlorid und 1 mMol Magnesiumchlorid enthält

### Beispiel 2

Zur Herstellung einer Formulierung werden
- 25,0 Gew.-Teile: 1-(4-Chlorphenyl)-4,4-dimethyl-3-(1,2,4-triazol-1-yl-methyl)-pentan-3-ol der Formel 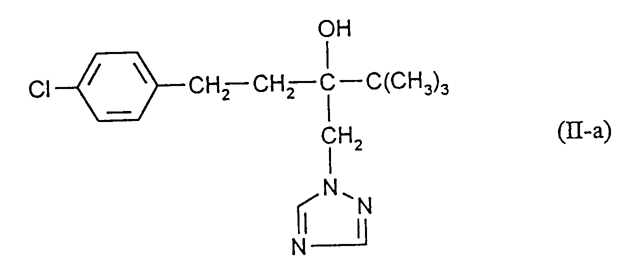
- 20,0 Gew.-Teile: Phosphorsäure-tri-n-butylester,
- 6,5 Gew.-Teile: 4-(n-Dodecyl)-benzol-sulfonsäure-(2-hydroxyethyl)-ammoniumsalz,
- 6,5 Gew.-Teile: des Emulgators der durchschnittlichen Zusammensetzung der Formel 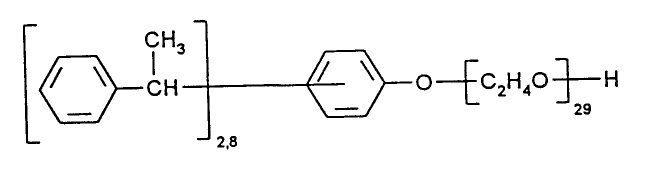
- 5,0 Gew.-Teile: N-Methyl-pyrrolidon,
- 2,0 Gew.-Teile: Wasser und
- 35,0 Gew.-Teile: eines Gemisches aus durchschnittlich
- 5 %: Hexansäure-dimethylamid,
- 50 %: Octansäure-dimethylamid,
- 40 %: Decansäure-dimethylamid und
- 5 %: Dodecansäure-dimethylamid bei Raumtemperatur vermischt und zu einer homogenen Flüssigkeit verrührt. Aus
dem so erhaltenen Konzentrat wird durch Vermischen mit Wasser definierter Härte (CIPAC-C-Wasser; vgl. Beispiel 1) eine Spritzflüssigkeit hergestellt, in welcher das Konzentrat in einer Konzentration von 0,5 Gew.-% enthalten ist.

### Beispiel 3

Zur Herstellung einer Formulierung werden
- 25,0 Gew.-Teile: 1-(4-Chlorphenyl)-4,4-dimethyl-3-(1,2,4-triazol-1-yl-methyl)-pentan-3-ol der Formel 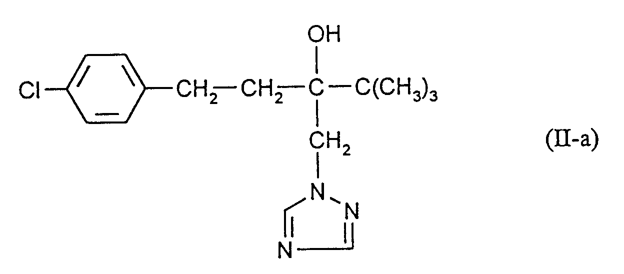
- 20,0 Gew.-Teile: Phosphorsäure-tri-n-butyl-ester,
- 35,0 Gew.-Teile: eines Gemisches aus durchschnittlich
- 5 %: Hexansäuredimethylamid,
- 50 %: Octansäuredimethylamid,
- 40 %: Decansäuredimethylamid und
- 5 %: Dodecansäuredimethylamid
und
- 20,0 Gew.-Teile: eines Umsetzungsprodukts von Ricinusöl mit Ethylenoxid im Molverhältnis 1:30
bei Raumtemperatur vermischt und zu einer homogenen Flüssigkeit verrührt. Aus dem so erhaltenen Konzentrat wird durch Vermischen mit Wasser definierter Härte (CIPAC-C Wasser, vgl. Beispiel 1) eine Spritzbrühe hergestellt, in welcher das Konzentrat in einer Konzentration von 0,5 Gew.-% enthalten ist.

### Beispiel 4

Zur Herstellung einer Formulierung werden
- 25,0 Gew.-Teile: 1-(4-Chlorphenyl)-4,4-dimethyl-3-(1,2,4-triazol-1-yl-methyl)-pentan-3-ol der Formel 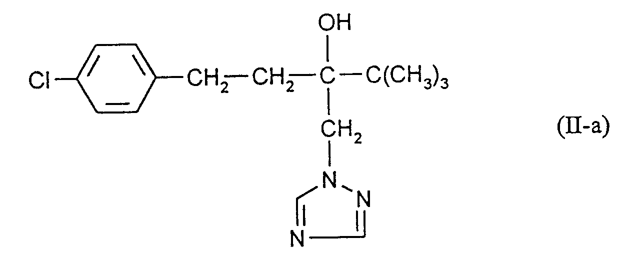
- 20,0 Gew.-Teile: Phosphorsäure-tri-(2-ethyl-hexyl)-ester,
- 35,0 Gew.-Teile: eines Gemisches aus durchschnittlich
- 5 %: Hexansäuredimethylamid,
- 50 %: Octansäuredimethylamid,
- 40 %: Decansäuredimethylamid und
- 5 %: Dodecansäuredimethylamid,
- 6,5 Gew.-Teile: des Emulgators der durchschnittlichen Zusammensetzung der Formel 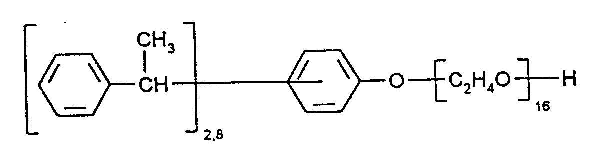
- 6,5 Gew.-Teile: 4-(n-Dodecyl)-benzol-sulfonsäure-(2-hydroxyethyl)-ammoniumsalz,
- 5,0 Gew.-Teile: N-Methylpyrrolidon und
- 2,0 Gew.-Teile: Wasser
bei Raumtemperatur vermischt und zu einer homogenen Flüssigkeit verrührt. Aus dem so erhaltenen Konzentrat wird durch Vermischen mit Wasser definierter Härte (CIPAC-C Wasser, vgl. Beispiel 1) eine Spritzbrühe hergestellt, in welcher das Konzentrat in einer Konzentration von 0,5 Gew.-% enthalten ist.

### Beispiel 5

Zur Herstellung einer Formulierung werden
- 25,0 Gew.-Teile: 1-(4-Chlorphenyl)-4,4-dimethyl-3-(1,2,4-triazol-1-yl-methyl)-pentan-3-ol der Formel 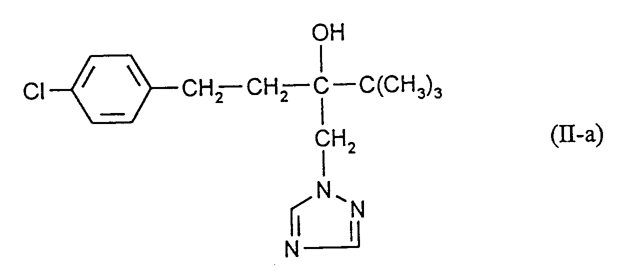
- 30,0 Gew.-Teile: Phosphorsäure-tri-n-butyl-ester,
- 20,0 Gew-Teile: N-Octylcaprolactam,
- 9,0 Gew.-Teile: N-Methylpyrrolidon,
- 8,0 Gew.-Teile: des Emulgators der durchschnittlichen Zusammensetzung der Formel 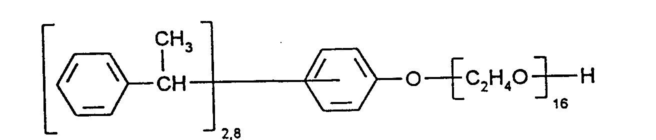 und
- 8,0 Gew.-Teile: 4-(n-Dodecyl)-benzol-sulfonsäure-(2-hydroxyethyl)-ammoniumsalz,
bei Raumtemperatur vermischt und zu einer homogenen Flüssigkeit verrührt. Aus dem so erhaltenen Konzentrat wird durch Vermischen mit Wasser definierter Härte (CIPAC-C Wasser, vgl. Beispiel 1) eine Spritzbrühe hergestellt, in welcher das Konzentrat in einer Konzentration von 0,5 Gew.-% enthalten ist.

### Beispiel A (Vergleich)

### Bekannt aus EP-OS 0 453 899

Zur Herstellung einer Formulierung werden
- 25,0 Gew.-Teile: 1-(4-Chlorphenyl)-4,4-dimethyl-3-(1,2,4-triazol-1-yl-methyl)-pentan-3-ol der Formel 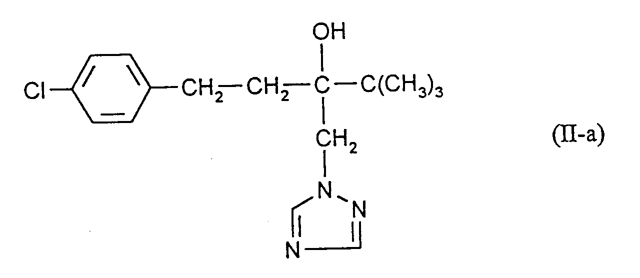
- 35,0 Gew.-Teile: eines Gemisches aus durchschnittlich
- 5 %: Hexansäure-dimethylamid,
- 50 %: Octansäure-dimethylamid,
- 40 %: Decansäure-dimethylamid und
- 5 %: Dodecansäure-dimethylamid,
- 6,5 Gew.-Teile: des Emulgators der durchschnittlichen Zusammensetzung der Formel 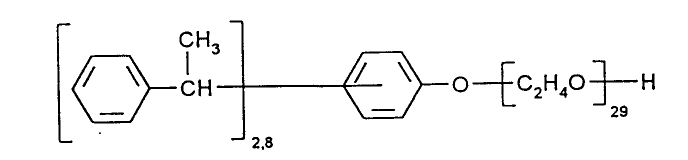
- 20,0 Gew.-Teile: N-Octyl-pyrrolidon,
- 5,0 Gew.-Teile: N-Methyl-pyrrolidon,
- 6,5 Gew.-Teile: 4-(n-Dodecyl)-benzol-sulfonsäure-(2-hydroxyethyl)-ammoniumsalz und
- 2,0 Gew.-Teile: Wasser
bei Raumtemperatur vermischt und zu einer homogenen Flüssigkeit verrührt. Aus dem so erhaltenen Konzentrat wird durch Vermischen mit Wasser definierter Härte (CIPAC-C Wasser; vgl. Beispiel 1) eine Spritzflüssigkeit hergestellt, in welcher das Konzentrat in einer Konzentration von 0,5 Gew.-% enthalten ist.

### Verwendungsbeispiel

Zur Prüfung der Kristallisationseigenschaften werden jeweils 250 ml einer wäßrigen Spritzflüssigkeit, die einen Konzentratgehalt von 0,5 Gew.-% aufweist, in einer Durchflußapparatur bei einer Temperatur von 5°C in ständiger Wiederholung durch ein feinmaschiges Sieb gepumpt. Die Kristallabscheidung am Sieb wird indirekt dadurch ermittelt, daß der Differenzdruck am Sieb gemessen wird. Ein starker Druckanstieg zeigt an, daß die Maschen des Siebes durch Kristallabscheidung weitgehend verstopft sind.

Die eingesetzten Formulierungen und die Versuchsergebnisse gehen aus der folgenden Tabelle hervor.

**Tabelle 1**

| Formulierung gemäß Beispiel | Kristallabscheidung am Sieb der Durchflußapparatur |
|---|---|
| 1 (erfindungsgemäß) | Nach 9,9 Stunden beginnende Kristallabscheidung auf dem Sieb |
| 2 (erfindungsgemäß) | Nach 8,5 Stunden beginnende Kristallabscheidung auf dem Sieb |
| 3 (erfindungsgemäß) | Nach 11,8 Stunden beginnende Kristallabscheidung auf dem Sieb |
| 4 (erfindungsgemäß) | Nach 9,4 Stunden beginnende Kristallabscheidung auf dem Sieb |
| 5 (erfindungsgemäß) | Nach 100 Stunden noch keine Kristallabscheidung auf dem Sieb |
| A (bekannt) | Nach 6,4 Stunden beginnende Kristallabscheidung auf dem Sieb |

## Patentansprüche

1. Verwendung von Phosphorsäureestern der Formel 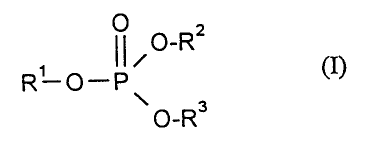 in welcher
R¹ für Alkyl mit 2 bis 18 Kohlenstoffatomen steht und
R² und R³ unabhängig voneinander für Alkyl mit 2 bis 12 Kohlenstoffatomen stehen
beim Ausbringen von wäßrigen Spritzflüssigkeiten, die
A) mindestens ein Azol-Derivat der Formel 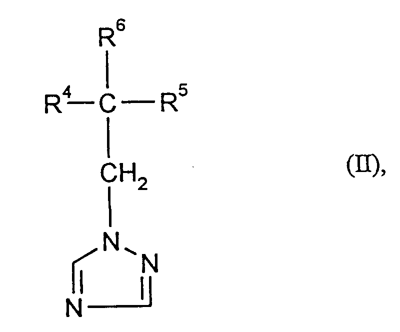 in welcher
a)
R⁴ für 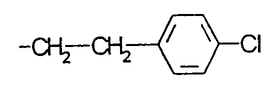 steht,
R⁵ für tert.-Butyl steht und
R⁶ für Hydroxy steht,
oder
b)
R⁴ für 4-Fluorphenyl steht,
R⁵ für 2-Fluorphenyl steht und
R⁶ für Hydroxy steht,
oder
c)
R⁴ für 2,4-Dichlorphenyl steht,
R⁵ für n-Butyl steht und
R⁶ für Hydroxy steht,
oder
d)
R⁴ für 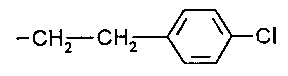 steht,
R⁵ für Phenyl steht und
R⁶ für Cyano steht,
oder
e)
R⁴ für 4-Chlorphenyl steht,
R⁵ für 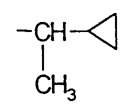 steht und
R⁶ für Hydroxy steht,
und/oder
mindestens ein Azol-Derivat der Formel 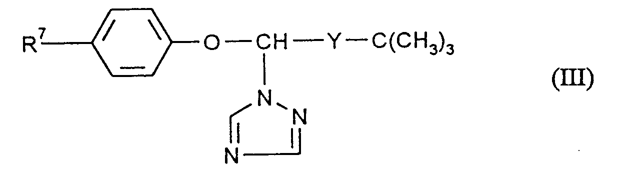 in welcher
a)
Y für -CH(OH) steht und
R⁷ für Chlor oder Phenyl steht,
oder
b)
Y für CO steht und
R⁷ für Chlor steht,
und/oder mindestens ein Azol-Derivat der Formel 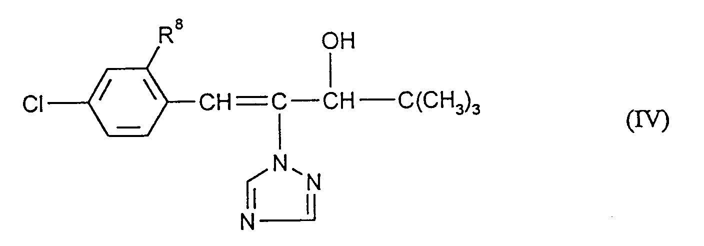 in welcher
R⁸ für Wasserstoff oder Chlor steht,
und/oder
1-([Bis-(4-fluorphenyl)-methyl-silyl]-methyl)-1H-(1,2,4-triazol) der Formel 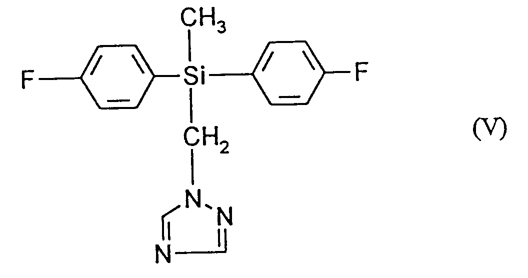 und/oder
1-[3-(2-Chlorphenyl)-2-(4-fluorphenyl)-oxiran-2-yl-methyl]-1H-(1,2,4-triazol) der Formel 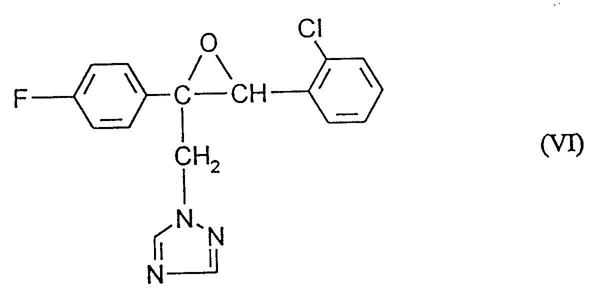 und
B) gegebenenfalls einen oder mehrere weitere Wirkstoffe sowie Zusatzstoffe
enthalten, um ein Auskristallisieren der Wirkstoffe der Formeln (II) bis (VI) in den Spritzgeräten zu verhindern.

2. Verwendung gemäß Anspruch 1, dadurch gekennzeichnet, daß man Phosphorsäureester der Formel (I) einsetzt, in denen
R¹ für geradkettiges oder verzweigtes Alkyl mit 4 bis 12 Kohlenstoffatomen steht,
R² für geradkettiges oder verzweigtes Alkyl mit 2 bis 8 Kohlenstoffatomen steht und
R³ für geradkettiges oder verzweigtes Alkyl mit 2 bis 8 Kohlenstoffatomen steht.

3. Verwendung gemäß Anspruch 1, dadurch gekennzeichnet, daß man Phosphorsäurester der Formel (I) einsetzt, in denen
R¹ für n-Butyl, iso-Butyl, sek.-Butyl, tert.-Butyl, n-Pentyl, n-Hexyl, 2-Ethyl-hexyl, n-Heptyl, n-Octyl, iso-Octyl, n-Nonyl, iso-Nonyl, n-Decyl, n-Dodecyl oder iso-Dodecyl steht,
R² für Ethyl, n-Butyl, iso-Butyl, sek.-Butyl, tert.-Butyl, n-Pentyl, n-Hexyl, 2-Ethyl-hexyl, n-Heptyl, n-Octyl oder iso-Octyl steht und
R³ für Ethyl, n-Butyl, iso-Butyl, sek.-Butyl, tert.-Butyl, n-Pentyl, n-Hexyl, 2-Ethyl-hexyl, n-Heptyl, n-Octyl oder iso-Octyl steht.

4. Verwendung gemaß Anspruch 1, dadurch gekennzeichnet, daß man Phosphorsäure-tri-n-butylester einsetzt.

5. Verwendung gemäß Anspruch 1, dadurch gekennzeichnet, daß man Phosphorsäure-tri-n-butylester in Spritzflüssigkeiten einsetzt, die 1-(4-Chlorphenyl)-4,4-dimethyl-3-(1,2,4-triazol-1-yl)-methyl)-pentan-3-ol der Formel 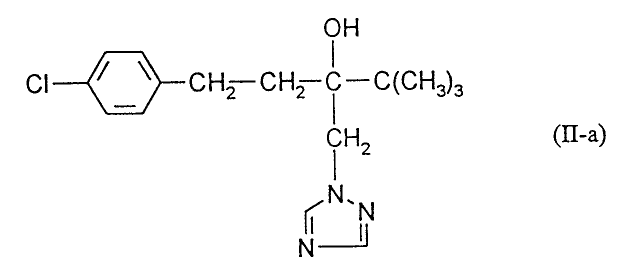 enthalten.

6. Verfahren zur Verhinderung der Kristallisation von Wirkstoffen der Formeln (II) bis (VI) gemäß Anspruch 1 beim Ausbringen von wäßrigen Spritzflüssigkeiten, die mindestens einen Wirkstoff der Formeln (II) bis (VI) enthalten, dadurch gekennzeichnet, daß man den Spritzflüssigkeiten mindestens einen Phosphorsäureester der Formel (I) gemäß Anspruch 1 zusetzt.

## Claims

1. Use of phosphoric esters of the formula 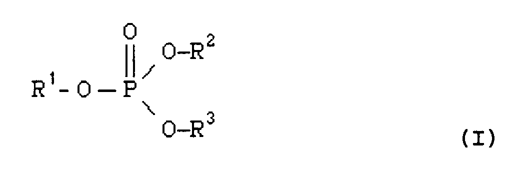 in which
R¹ represents alkyl having 2 to 18 carbon atoms and
R² and R³ independently of one another represent alkyl having 2 to 12 carbon atoms
for applying aqueous spray mixtures which contain
A) at least one azole derivative of the formula 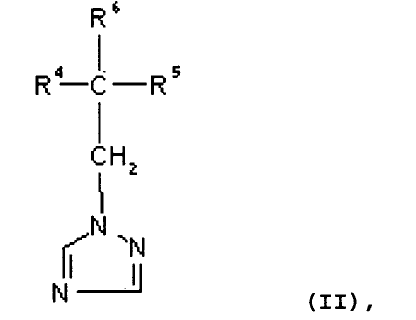 in which
a)
R⁴ represents 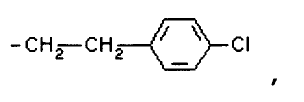
R⁵ represents tert-butyl and
R⁶ represents hydroxyl,
or
b)
R⁴ represents 4-fluorophenyl,
R⁵ represents 2-fluorophenyl and
R⁶ represents hydroxyl,
or
c)
R⁴ represents 2,4-dichlorophenyl,
R⁵ represents n-butyl and
R⁶ represents hydroxyl,
or
d)
R⁴ represents 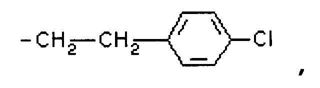
R⁵ represents phenyl and
R⁶ represents cyano,
or
e)
R⁴ represents 4-chlorophenyl,
R⁵ represents 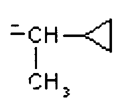 and
R⁶ represents hydroxyl,
and/or
at least one azole derivative of the formula 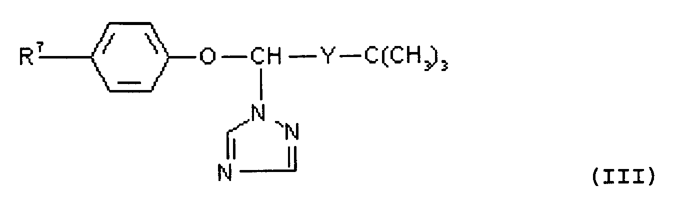 in which
a)
Y represents -CH(OH) and
R⁷ represents chlorine or phenyl,
or
b)
Y represents CO and
R⁷ represents chlorine,
and/or
at least one azole derivative of the formula 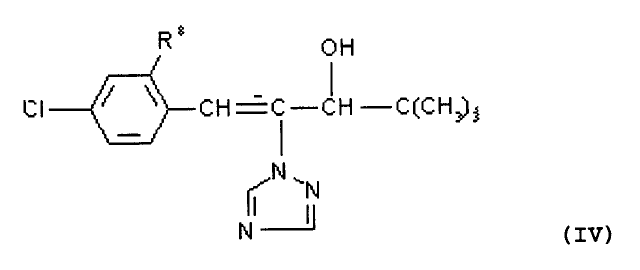 in which
R⁸ represents hydrogen or chlorine,
and/or
1-([bis-(4-fluorophenyl)-methyl-silyl]-methyl)-1H-(1,2,4-triazole) of the formula 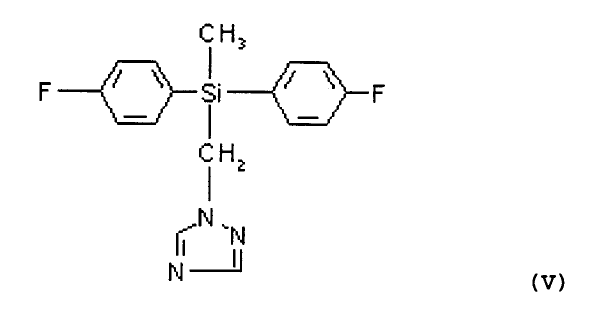 and/or
1-[3-(2-chlorophenyl)-2-(4-fluorophenyl)-oxiran-2-yl-methyl]-1H-(1,2,4-triazole) of the formula 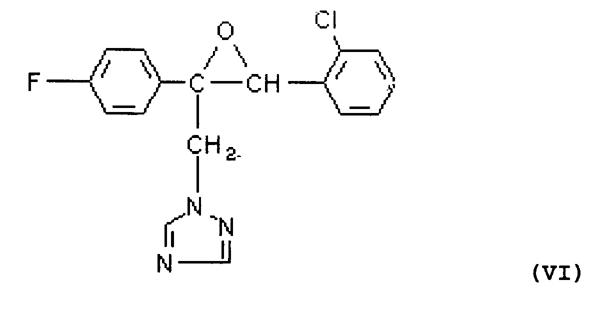 and
B) if appropriate one or more other active compounds and additives
in order to prevent crystallization of the active compounds of the formulae (II) to (VI) in the spray equipment.

2. Use according to Claim 1, characterized in that phosphoric esters of the formula (I) are employed in which
R¹ represents straight-chain or branched alkyl having 4 to 12 carbon atoms.
R² represents straight-chain or branched alkyl having 2 to 8 carbon atoms and
R³ represents straight-chain or branched alkyl having 2 to 8 carbon atoms.

3. Use according to Claim 1, characterized in that phosphoric esters of the formula (I) are employed in which
R¹ represents n-butyl, iso-butyl, sec-butyl, tert-butyl, n-pentyl, n-hexyl, 2-ethyl-hexyl, n-heptyl, n-octyl, iso-octyl, n-nonyl, iso-nonyl, n-decyl, n-dodecyl or iso-dodecyl.
R² represents ethyl, n-butyl, iso-butyl, sec-butyl, tert-butyl, n-pentyl, n-hexyl, 2-ethyl-hexyl, n-heptyl, n-octyl or iso-octyl.
R³ represents ethyl, n-butyl, iso-butyl, sec-butyl, tert-butyl, n-pentyl, n-hexyl, 2-ethyl-hexyl, n-heptyl, n-octyl or iso-octyl.

4. Use according to Claim 1, characterized in that tri-n-butyl phosphate is employed.

5. Use according to Claim 1, characterized in that tri-n-butyl phosphate is employed in spray mixtures which contain 1-(4-chlorophenyl)-4,4-dimethyl-3-(1,2,4-triazol-1-yl)-methyl)-pentan-3-ol of the formula

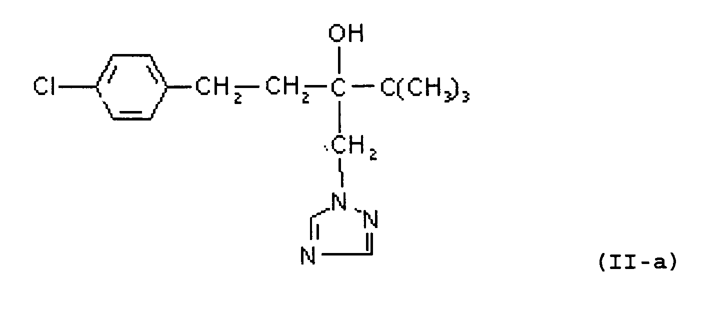

6. Process for preventing the crystallization of compounds of the formula (II) to (VI) according to Claim 1, when aqueous spray mixtures are applied which contain at least one active compound of the formula (II) to (VI), characterized in that at least one phosphoric ester of the formula (I) according to Claim 1 is added to the spray mixtures.

## Revendications

1. Utilisation d'esters phosphoriques répondant à la formule 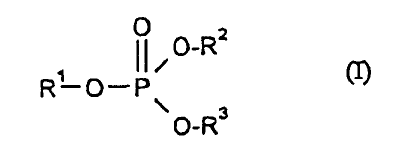 dans laquelle
R¹ représente un groupe alkyle contenant de 2 à 18 atomes de carbone, et
R² et R³ représentent, indépendamment l'un de l'autre, un groupe alkyle contenant de 2 à 12 atomes de carbone,
lors de l'épandage de liquides de pulvérisation aqueux qui contiennent
A) au moins un dérivé d'azole répondant à la formule 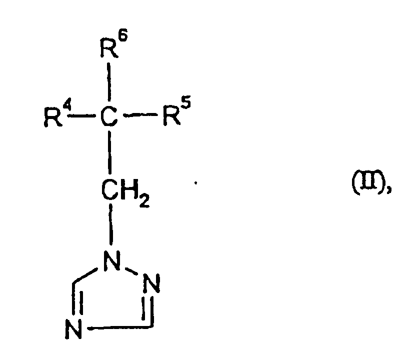 dans laquelle
a)
R⁴ représente 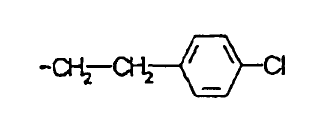
R⁵ représente un groupe tert.-butyle, et
R⁶ représente un groupe hydroxyle,
ou
b)
R⁴ représente un groupe 4-fluorophényle,
R⁵ représente un groupe 2-fluorophényle, et
R⁶ représente un groupe hydroxyle,
ou
c)
R⁴ représente un groupe 2,4-dichlorophényle,
R⁵ représente un groupe n-butyle, et
R⁶ représente un groupe hydroxyle,
ou
d)
R⁴ représente 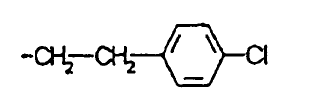
R⁵ représente un groupe phényle, et
R⁶ représente un groupe cyano,
ou
e)
R⁴ représente un groupe 4-chlorophényle,
R⁵ représente 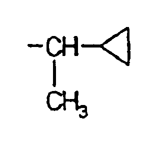
R⁶ représente un groupe hydroxyle,
et/ou
au moins un dérivé d'azole répondant à la formule 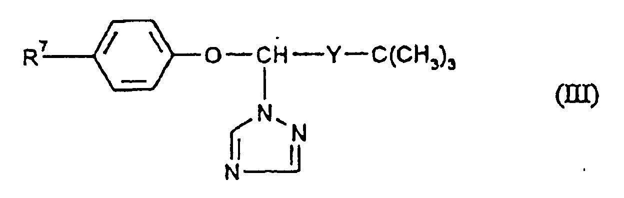 dans laquelle
a)
Y représente un groupe -CH(OH), et
R⁷ représente un atome de chlore ou un groupe phényle,
ou
b)
Y représente un groupe CO, et
R⁷ représente un atome de chlore,
et/ou
au moins un dérivé d'azole répondant à la formule 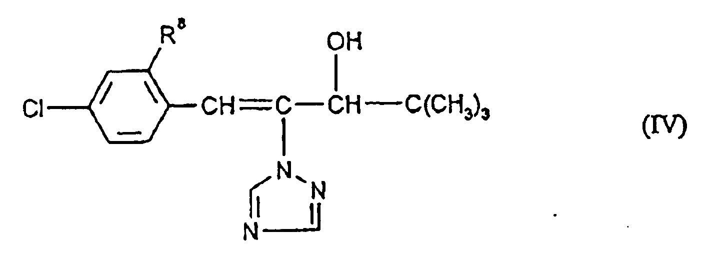 dans laquelle
R⁸ représente un atome d'hydrogène ou un atome de chlore,
et/ou
le 1-([bis-(4-fluorophényl)-méthyl-silyl]méthyl)-1H-(1,2,4)triazole) répondant à la formule 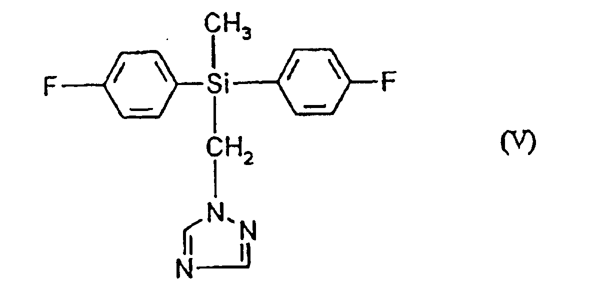 et/ou
le 1-[3-(2-chlorophényl)-2-(4-fluorophényl)oxiran-2-yl-méthyl]-1H-(1,2,4-triazole) répondant à la formule 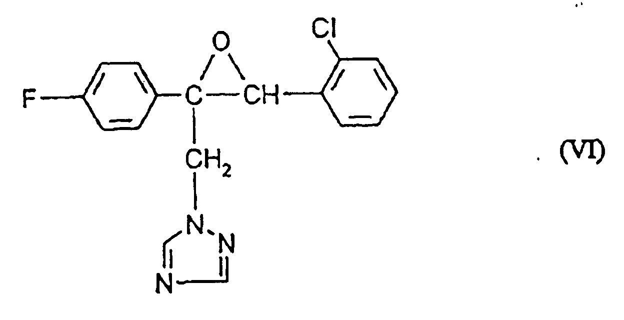 et
B) le cas échéant, une ou plusieurs autres substances actives et un ou plusieurs autres additifs,
pour empêcher une cristallisation des substances actives des formules (II) à (VI) dans les pulvérisateurs.

2. Utilisation selon la revendication 1, caractérisée en ce qu'on met en oeuvre des esters phosphoriques de formule (I) dans lesquels
R¹ représente un groupe alkyle à chaîne droite ou ramifiée contenant de 4 à 12 atomes de carbone,
R² représente un groupe alkyle à chaîne droite ou ramifiée contenant de 2 à 8 atomes de carbone, et
R³ représente un groupe alkyle à chaîne droite ou ramifiée contenant de 2 à 8 atomes de carbone.

3. Utilisation selon la revendication 1, caractérisée en ce qu'on met en oeuvre des esters phosphoriques de formule (I) dans lesquels
R¹ représente un groupe n-butyle, un groupe isobutyle, un groupe sec.-butyle, un groupe tert.-butyle, un groupe n-pentyle, un groupe n-hexyle, un groupe 2-éthylhexyle, un groupe n-heptyle, un groupe n-octyle, un groupe isooctyle, un groupe n-nonyle, un groupe isononyle, un groupe n-décyle, un groupe n-dodécyle ou un groupe isododécyle,
R² représente un groupe éthyle, un groupe n-butyle, un groupe isobutyle, un groupe sec.-butyle, un groupe tert.-butyle, un groupe n-pentyle, un groupe n-hexyle, un groupe 2-éthylhexyle, un groupe n-heptyle, un groupe n-octyle ou un groupe isooctyle, et
R³ représente un groupe éthyle, un groupe n-butyle, un groupe isobutyle, un groupe sec.-butyle, un groupe tert.-butyle, un groupe n-pentyle, un groupe n-hexyle, un groupe 2-éthylhexyle, un groupe n-heptyle, un groupe n-octyle ou un groupe isooctyle.

4. Utilisation selon la revendication 1, caractérisée en ce qu'on met en oeuvre l'ester tri-n-butylique de l'acide phosphorique.

5. Utilisation selon la revendication 1, caractérisée en ce qu'on met en oeuvre l'ester tri-n-butylique de l'acide phosphorique dans des liquides de pulvérisation qui contiennent le 1-(4-chlorophényl)-4,4-diméthyl-3-(1,2,4-triazol-1-yl)méthyl)-pentan-3-ol de formule

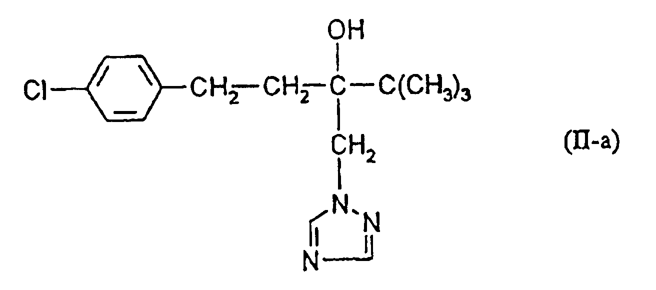

6. Procédé pour empêcher la cristallisation de substances actives des formules (II) à (VI) selon la revendication 1 lors de l'épandage de liquides de pulvérisation aqueux, qui contiennent au moins une substance active répondant aux formules (II) à (VI), caractérisé en ce qu'on ajoute aux liquides de pulvérisation, au moins un ester phosphorique de formule (I) selon la revendication 1.
